# EUROPÄISCHE PATENTSCHRIFT

(11) **EP 0 858 143 B1**
(45) Veröffentlichungstag und Bekanntmachung des Hinweises auf die Patenterteilung: **22.09.2004**
(21) Anmeldenummer: 97121885.4
(22) Anmeldetag: 12.12.1997
(51) Int. Cl.: G07C 3/00, H02J 13/00

(54) **Überwachungseinrichtung für netzbetriebene Haushaltsgeräte**
Monitoring device for mains-operated houshold devices
Dispositif de surveillance pour des appareils ménagers branchés sur le secteur

(30) Priorität: 05.02.1997 DE 19704216
(43) Veröffentlichungstag der Anmeldung: 12.08.1998
(73) Patentinhaber: Deutsche Telekom AG, 53113 Bonn (DE)
(72) Erfinder: Lorenz, Manfred, 53129 Bonn (DE)

(56) Entgegenhaltungen:
- EP-A- 0 806 829
- WO-A-97/31430
- DE-A- 4 122 989
- DE-A- 19 537 280
- DE-C- 4 413 467
- US-A- 4 642 637
- US-A- 4 656 593
- US-A- 4 896 277
- US-A- 5 089 809
- US-A- 5 233 342

## Beschreibung

Die Erfindung betrifft eine Überwachungseinrichtung für netzbetriebene Haushaltsgeräte zur Kopplung mit Netzstromzuleitungen.

Moderne Haushaltsgeräte, wie beispielsweise Waschmaschinen, Wäschetrockner etc., verfügen heutzutage über aufwendige Elektronik, mit deren Hilfe unterschiedliche Betriebszustände erfasst und abhängig davon die entsprechenden Funktionen ausgelöst werden. Hierzu zählt beispielsweise auch, das Haushaltsgerät abzuschalten, wenn ein fehlerhafter Betriebszustand erkannt wird. Eine derartige Möglichkeit, Betriebszustände zu überwachen, ist jedoch bei älteren Haushaltsgeräten aufgrund der fehlenden Elektronik nicht möglich.

Aus dem Stand der Technik US-A-5 089 809 ist eine Vorrichtung zur Überwachung von Haushaltsgeräten bekannt. Die beschriebene Vorrichtung besteht aus einem Transmitter mit einem Stromdetektor, welcher den Strom misst, der vom Haushaltsgerät aufgenommen wird, und einer Statusanzeige, welche den Zustand des Haushaltsgeräts anzeigt. Dabei wird jedoch lediglich angezeigt, ob das Haushaltsgerät augenblicklich in Betrieb ist oder nicht. Eine detailliertere Auswertung der Betriebszustände, nämlich ob beispielsweise bei einer Waschmaschine gerade Wasser eingelassen wird, oder ob gerade das Wasser erhitzt wird, ist nicht vorgesehen.

Aus der Druckschrift US-A-5 233 342 ist ein weiteres Überwachungssystem zur Überwachung elektrischer Geräte bekannt. Der Datenaustausch zwischen dem Detektor und der Steuereinheit erfordert jedoch einen Hausbus, was einen zusätzlichen Installationsaufwand zur Folge hat.

Aus dem nachveröffentlichten Stand der Technik WO 97/31430 A ist ein System zur Datenübertragung, Fernüberwachung und Fernsteuerung bekannt, bei dem das Stromnetz benutzt wird, um Daten zu übertragen. Die Übertragung der Daten erfolgt dabei ohne dass vorher eine Modulation der Daten erfolgt. Die von einem Sensor der Fernüberwachung erzeugten Daten werden über das 220 V Stromnetz gesendet, mit einem induktiven Empfänger empfangen und einer Steuereinheit zugeführt.

Schließlich ist aus der ebenfalls nachveröffentlichten Offenlegungsschrift DE 195 37 280 A1 ein Sendemodul und ein Empfangsmodul für ein Kühl- und/oder Gefriergerät zur Überwachung und Anzeige des Betriebszustandes des Geräts bekannt. Dazu ist ein Sendemodul zum Übertragen von einer den Betriebszustand des Geräts charakterisierenden Information und/oder ein Empfangsmodul zum Empfang von einer den Betriebszustand des Geräts charakterisierenden Information und zur akustischen und/oder optischen Darstellung des Betriebszustands vorgesehen. Voraussetzung ist hierbei, dass in das Gerät ein entsprechendes Modul integriert ist und das Gerät selbst bereits die erforderlichen Sensoren aufweist.

Die Aufgabe der vorliegenden Erfindung besteht deshalb darin, eine Überwachungseinrichtung zu schaffen, mit deren Hilfe sich auch Haushaltsgeräte überwachen lassen, die nicht über entsprechend eingebaute Überwachungsschaltungen verfügen.

Diese Aufgabe wird durch die Überwachungseinheit mit den Merkmalen des Anspruchs 1 gelöst. Die Überwachungseinheit umfaßt eine Erfassungsvorrichtung, die den Netzzuleitungen zugeordnet ist und die Netzparameter, beispielsweise Spannung, Strom, Frequenz oder Impedanz, erfaßt, eine Speichervorrichtung, in der bestimmte Betriebszustände des Haushaltsgeräts mit den entsprechenden Netzparametern abgelegt sind, sowie eine Auswerteeinrichtung, die abhängig von den erfaßten Netzparametern den jeweiligen Betriebszustand aus der Speichervorrichtung ausliest. Dadurch ist es möglich, ältere Haushaltsgeräte nachzurüsten, wobei die Überwachungseinrichtung vorzugsweise in Form eines Zwischensteckers in die Netzspannungsversorgung des Haushaltsgeräts eingekoppelt wird. Ein Eingriff in die Elektronik des Haushaltsgeräts ist somit nicht notwendig.

Vorzugsweise werden die Datensignale mittels eines Modulationselements moduliert und vorzugsweise in die Netzzuleitungen eingekoppelt oder alternativ drahtlos übertragen.

Um bei einer Betriebsstörung das Haushaltsgerät abschalten zu können, umfaßt die Überwachungseinheit ein Schalterelement, das von der Auswerteeinrichtung steuerbar ist.

In einer weiteren Ausbildung der Erfindung weist die Auswerteeinrichtung ein Empfangselement zum Empfang von über die Netzzuleitungen übertragenen Datensignale auf. Damit ist es möglich, das Haushaltsgerät ferngesteuert ein- beziehungsweise auszuschalten.

In einer vorteilhaften Weiterbildung umfaßt die Auswerteeinrichtung ein Selbstlernelement, mit dessen Hilfe die momentan erfaßten Netzparameter zusammen mit dem beispielsweise manuell eingebbaren Betriebszustand in der Speichervorrichtung ablegbar sind. Damit läßt sich die Überwachungseinrichtung für unterschiedliche Haushaltsgeräte einsetzen.

Die Erfindung wird nun anhand eines Ausführungsbeispiels mit Bezug auf die Zeichnungen näher beschrieben. Dabei zeigen:
- Figur 1: eine schematische Darstellung eines Überwachungssystems mit mehreren Überwachungseinrichtungen,
- Figur 2a: ein Funktionsblockdiagramm einer Überwachungseinrichtung, und
- Figur 2b: ein Fuktionsblockdiagramm einer Überwachungszentrale.

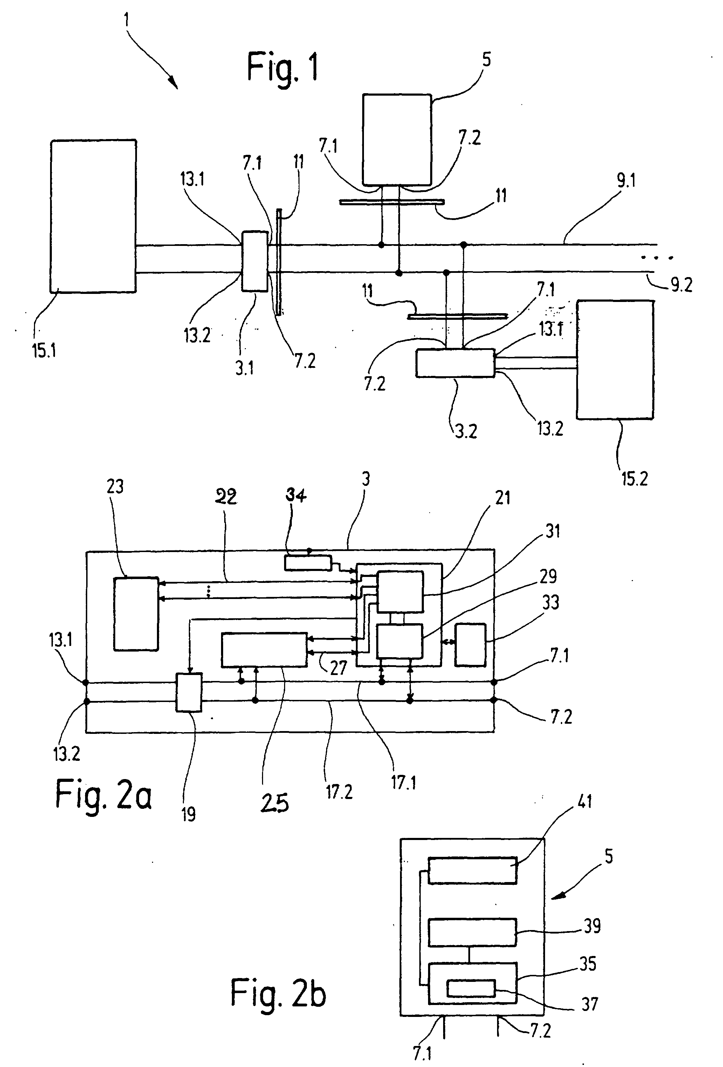

In Figur 1 ist ein Überwachungssystem 1 gezeigt, das zumindest eine, im vorliegenden Fall zwei Überwachungseinrichtungen 3.1, 3.2 sowie eine Überwachungszentrale 5 umfaßt. Sowohl die Überwachungszentrale 5 als auch die beiden Überwachungseinrichtungen 3.1, 3.2 weisen jeweils zwei Eingangsanschlüsse 7.1 und 7.2 auf, die jeweils mit Netzspannungsleitungen 9.1 beziehungsweise 9.2 elektrisch verbunden sind. Die Netzspannungsleitungen 9.1, 9.2 sind Teil eines fest installierten Spannungsversorgungsnetzes, beispielsweise für eine Wohnung oder ein Haus. Die Schnittstelle zwischen diesem fest installierten Netz und dem vom Benutzer einzurichtenden Bereich ist in Figur 1 schematisch durch eine Doppellinie 11 gekennzeichnet. Unter einer Schnittstelle 11 ist beispielsweise eine Steckdose zu verstehen.

Die beiden Überwachungseinrichtungen 3.1, 3.2 weisen neben den Eingangsanschlüssen 7.1, 7.2 auch Ausgangsanschlüsse 13.1, 13.2 auf, die elektrisch mit einem Haushaltsgerät 15.1 beziehungsweise 15.2 und dort mit den Netzspannungseingängen verbunden sind. Bei den Haushaltsgeräten kann es sich beispielsweise um Waschmaschinen, Wäschetrockener, Kühl- oder Gefrierschränke etc., handeln.

Der Aufbau einer Überwachungseinrichtung 3 soll nun mit Bezug auf die Figur 2a näher beschrieben werden. Die Überwachungseinrichtung 3 umfaßt zwei elektrische Leitungen 17.1, 17.2, die die Eingangsanschlüsse 7.1, 7.2 mit den Ausgangsanschlüssen 13.1 beziehungsweise 13.2 verbinden. In diesen Leitungsweg ist ein Schaltelement 19 eingekoppelt, das die elektrische Verbindung zwischen Ein- und Ausgangsanschlüssen abhängig von einem Steuersignal unterbrechen kann.

Dieses Steuersignal wird von einer Steuereinrichtung 21 generiert, die ihrerseits mit den beiden Leitungen 17.1, 17.2 elektrisch verbunden ist.

Der Steuereinrichtung 21 ist eine Speichereinrichtung 23 zugeordnet, wobei der Datenaustausch beispielsweise über ein Bussystem 22 erfolgt. Desweiteren ist der Steuereinrichtung 21 eine Erfassungseinrichtung 25, deren Eingangsanschlüsse mit den beiden Leitungen 17.1 und 17.2 verbunden sind, zugeordnet. Zur Übermittlung von Daten zwischen der Erfassungseinrichtung 25 und der Steuereinrichtung 21 sind Leitungen 27 vorgesehen.

Die Steuereinrichtung 21 ihrerseits umfaßt eine Sende- und Empfangseinrichtung 29 sowie eine Auswerteeinrichtung 31. Die Sende-/Empfangseinrichtung 29 weist einen -nicht dargestellten- Modulator/Demodulator auf, der Datensignale moduliert und in die Leitungen 17.1, 17.2 einkoppelt und der über diese Leitungen übertragene modulierte Datensignale demoduliert und der Auswerteeinrichtung 31 zuführt. Selbstverständlich ist es auch möglich, die Datensignale drahtlos, beispielsweise per Funk, zu übertragen.

Die Auswerteeinrichtung 31 ist unter anderem mit der Erfassungseinrichtung 25 verbunden, um die erfaßten und übermittelten Daten auszuwerten, entsprechende Datensignale zu generieren und an die Sende-/Empfangseinrichtung 29 zu übertragen. Darüber hinaus ist die Auswerteeinrichtung 31 mit der Speichereinrichtung 23 über den Bus 22 verbunden, um abhängig von den von der Erfassungseinrichtung 25 gelieferten Signalen entsprechende Daten aus dem Speicher zu lesen.

In einer vorteilhaften Ausgestaltung der Überwachungseinrichtung 3 ist der Steuereinrichtung 21 ein Selbstlernelement 33 zugeordnet, das beispielsweise über ein Bedienelement vom Benutzer aktiviert werden kann. Die Funktion dieses Selbstlernelements wird später noch ausführlich beschrieben.

In einer weiteren vorteilhaften Ausführungsform weist die Überwachungseinrichtung 3 eine der Steuereinrichtung zugeordnete Schnittstelle 34 auf, die dem Anschluß zusätzlicher Erfassungseinrichtungen, beispielsweise eines Wassermengenmeßgerätes, dient. Somit lassen sich neben den Netzparametern zusätzliche Parameter überwachen. Des weiteren lassen sich an die Schnittstelle 34 auch Schalt- und/oder Steuereinrichtungen anschließen, die beispielsweise zum Betätigen eines Ventils oder zur Steuerung einer Durchflußmenge dienen.

Die in Figur 1 dargestellte Überwachungszentrale 5 umfaßt -wie in Figur 2b dargestellt- eine Steuereinrichtung 35 mit einer Sende- und Empfangseinheit 37, die mit den Anschlüssen 7.1 und 7.2 verbunden ist. Der Steuereinrichtung 35 ist eine Anzeigeeinheit 39 zur Anzeige von Betriebszuständen ausgewählter Haushaltsgeräte, sowie eine Eingabeeinrichtung 41, beispielsweise in Form einer Tastatur, zur Eingabe von Daten zugeordnet.

Die Funktion der Überwachungseinrichtung 3 sowie der Überwachungszentrale 5 wird nun im folgenden beschrieben, wobei als Haushaltsgerät 15 beispielhaft eine Waschmaschine überwacht werden soll.

Eine Waschmaschine 15.1 durchläuft während eines Waschprogramms unterschiedliche Betriebszustände, so beispielsweise das Einlassen von Wasser, das Erhitzen des Wassers, Antrieb der Waschtrommel mit unterschiedlichen Geschwindigkeiten, Abpumpen des Wassers etc. Jeder dieser Betriebszustände kennzeichnet sich durch eine definierte Leistungsaufnahme aus. Mithin ändert sich die Höhe des fließenden Stroms in jedem Betriebszustand. Darüber hinaus ändert sich auch die Phasenbeziehung zwischen Strom und Spannung, abhängig davon, ob in den einzelnen Betriebszuständen ohmsche oder induktive Lasten versorgt werden. Desweiteren entstehen bei der Verwendung von Phasenanschnittschaltungen Oberwellen bestimmter Frequenz. Auf der Basis dieser Parameter läßt sich also eine Aussage darüber treffen, in welchem Betriebszustand sich die Waschmaschine 15.1 gerade befindet. Diese Zuordnung von Spannungs/Stromparametern zu Betriebszuständen macht sich die vorliegende Erfindung zunutze.

Zunächst wird die Überwachungseinrichtung 3.1 in die Spannungsversorgungsleitungen der Waschmaschine 15.1 eingeschaltet. Wird die Überwachungseinrichtung 3.1 in Form eines Zwischensteckers ausgebildet, ist das Einschalten besonders einfach durchzuführen. Im anfänglichen deaktivierten Zustand der Überwachungseinrichtung 3.1 ist das Schaltelement 19 geschlossen, so daß eine elektrische Verbindung zwischen den Eingangsanschlüssen 7 und den Ausgangsanschlüssen 13 besteht. Die Waschmaschine 15.1 läßt sich dann wie gewohnt betreiben.

Sobald die Überwachungseinrichtung 3 -entweder direkt oder indirekt über die Überwachungszentrale 5-aktiviert wird, erfaßt die Erfassungseinrichtung 25 Spannungs-, Strom-, Frequenz- und Impedanz-Werte der Leitungen 17.1, 17.2. Diese Werte werden über die Leitungen 27 der Steuereinrichtung 21 und dort der Auswerteeinrichtung 31 zugeführt. Die Auswerteeinrichtung 31 liest dann aus der Speichereinrichtung 23 die zu diesen Werten abgelegte Information über den Betriebszustand der Waschmaschine aus.

Diese Betriebszustandsdaten werden an die Sende/Empfangseinrichtung 29 übermittelt, die die Daten moduliert und in die Leitungen 17.1 und 17.2 einkoppelt. Aufgrund der elektrischen Verbindung zwischen den Leitungen 17.1, 17.2 und den Netzleitungen 9.1, 9.2 ist das modulierte Signal an jeder mit diesen Leitungen 9.1, 9.2 verbundenen Schnittstellen 11 abgreifbar. Somit empfängt die Sende- und Empfangseinheit 37 der ebenfalls an eine Schnittstelle 11 angeschlossenen Überwachungszentrale 5 dieses modulierte Signal, das dann entsprechend demoduliert und von der Steuereinrichtung 35 verarbeitet und als für den Benutzer lesbare Information mittels der Anzeigeeinheit 39 angezeigt wird.

Sollten die von der Erfassungseinrichtung 25 gelieferten Signale auf einen fehlerhaften Betriebszustand hinweisen, steuert die Steuereinrichtung 31 das Schaltelement 19 an, das daraufhin die elektrische Verbindung zwischen den Eingangsanschlüssen 7 und den Ausgangsanschlüssen 13 unterbricht. Gleichzeitig wird dieser fehlerhafte Betriebszustand dem Benutzer über die Anzeigeeinrichtung 39 der Überwachungszentrale 5 und bei Bedarf akustisch mittels einer Alarmschaltung in der Überwachungseinrichtung 3 angezeigt. Sollte der Benutzer einen Weiterbetrieb wünschen, kann er über die Tastatur 41 die Steuereinrichtung 35 dazu veranlassen, ein moduliertes Datensignal zu generieren und den Leitungen 9.1, 9.2 aufzuprägen. Dieses Datensignal wird von der Sende-/Empfangseinrichtung 29 der Steuereinrichtung 21 empfangen und der Auswerteeinrichtung 31 zugeführt. Diese sorgt dann dafür, daß das Schaltelement 19 wieder in den geschlossenen Zustand geschaltet wird, so daß ein Weiterbetrieb möglich ist. Selbstverständlich läßt sich das Schaltelement 19 auch mittels eines an der Überwachungseinrichtung 3.1 selbst vorgesehenen Bedienelements umschalten.

In der einfachsten Ausführung der Überwachungseinrichtung 3 sind in der Speichereinrichtung 23 lediglich die ein spezifisches Haushaltsgerät betreffenden Daten abgelegt. Um die Flexibilität jedoch zu erhöhen, ist es möglich, die Daten einer Vielzahl von Haushaltsgeräten abzulegen, wobei beispielsweise mittels DIP-Schaltern das zu überwachende Haushaltsgerät vor Inbetriebnahme der Überwachungseinrichtung auswählbar ist. Eine weitere Erhöhung der Flexibilität läßt sich dann erreichen, wenn die Daten in einem sogenannten "Lernmodus" während eines Betriebs des zu überwachenden Haushaltsgeräts in die Speichereinrichtung 23 eingeschrieben werden. In diesem Modus sorgt das Selbstlernelement 33 der Überwachungseinrichtung 3 dafür, daß die von der Erfassungseinrichtung 25 erfaßten Daten während des Betriebs des Haushaltsgeräts 15 zunächst an die Überwachungszentrale 5 übertragen und dort angezeigt werden. Der Benutzer hat dann diesen Daten den jeweiligen Betriebszustand zuzuordnen, so daß nach Übertragung dieses Betriebszustandsdatums an die Überwachungseinrichtung 3 das entsprechende Datenpaar in die Speichereinrichtung 23 eingeschrieben werden kann.

In dem zuvor beschriebenen Ausführungsbeispiel sind der Überwachungseinrichtung 3 eine Vielzahl von unterschiedlichen Funktionen zugeordnet. Selbstverständlich lassen sich einzelne dieser Funktionen auch von der Überwachungszentrale 5 ausführen, so daß die Überwachungseinrichtung 3 selbst mit geringerem baulichem Aufwand realisierbar ist. So ist es beispielsweise denkbar, die Auswerteeinrichtung 31 sowie die Speichereinrichtung 23 in die Überwachungszentrale 5 zu nehmen. Der Überwachungseinrichtung 3 kommt in diesem Fall nur noch die Aufgabe zu, die Netzparameter zu erfassen und diese erfaßten Werte als moduliertes Datensignal an die Überwachungszentrale 5 zu übertragen, wo dann die Auswertung stattfindet.

Das zuvor beschriebene Überwachungssystem, bestehend aus zumindest einer Überwachungseinrichtung 3 und einer Überwachungszentrale 5 eröffnet also eine einfache Möglichkeit, nicht über entsprechende Einrichtungen verfügende Haushaltsgeräte mit einer Überwachungsfunktion auszustatten, ohne daß in die Elektronik der Geräte selbst eingegriffen werden müßte.

## Patentansprüche

1. Überwachungseinheit für netzbetriebene Haushaltsgeräte zur Kopplung mit Netzstromzuleitungen, mit
einer Erfassungsvorrichtung (25), welche den Netzzuleitungen zugeordnet ist und welche Parameter, die an den Netzzuleitungen erfassbar sind, beispielsweise Spannung, Strom, Frequenz- oder Impedanz, erfasst,
einer Speichervorrichtung (23), in der bestimmte Betriebszustände des Haushaltsgeräts (15) mit den entsprechenden Parametern abgelegt sind, und einer Auswerteeinrichtung (21,29,31), die abhängig von den erfassten Parametern den jeweiligen Betriebszustand aus der Speichervorrichtung (23) ausliest.

2. Überwachungseinheit nach Anspruch 1, **dadurch gekennzeichnet, daß** die Auswerteeinrichtung (31) ein Modulationselement umfaßt, das ein dem Betriebszustand entsprechendes Datensignal moduliert und in die Netzzuleitungen (9.1,9.2) einkoppelt oder drahtlos überträgt.

3. Überwachungseinheit nach Anspruch 1 oder 2, **dadurch gekennzeichnet, daß** ein den Netzzuleitungen zugeordnetes Schaltelement (19) vorgesehen ist, das von der Auswerteeinrichtung (31) steuerbar ist.

4. Überwachungseinheit nach einem der vorhergehenden Ansprüche, **dadurch gekennzeichnet, daß** ein Empfangselement (29) vorgesehen ist, das drahtlos oder über die Netzzuleitungen (9.1,9.2) übertragene Datensignale empfängt und der Auswerteeinrichtung (31) zuführt.

5. Überwachungseinheit nach einem der vorhergehenden Ansprüche, **dadurch gekennzeichnet, daß** sie in Form eines Zwischensteckers ausgebildet ist.

6. Überwachungseinheit nach einem der vorhergehenden Ansprüche, **dadurch gekennzeichnet, daß** ein Lernelement (33) vorgesehen ist, das in einem Lern-Modus zu einem eingebbaren Betriebszustand die momentan erfaßten Parameter in die Speichervorrichtung (23) einschreibt.

7. Überwachungssystem zur Überwachung von netzbetriebenen Haushaltsgeräten, mit einer dem Haushaltsgerät (15) zugeordneten Überwachungseinrichtung (3), die eine Erfassungseinrichtung (25) zur Erfassung von Parameter, die an Netzzuleitungen erfassbar sind, eine Speichervorrichtung (23), in der bestimmte Betriebszustände des Haushaltsgeräts (15) mit den entsprechenden Parametern abgelegt sind, eine Auswerteeinrichtung (21, 29, 31), die abhängig von den erfassten Parametern den jeweiligen Betriebszustand aus der Speichervorrichtung (23) ausliest, und eine Modulationseinrichtung (29) zur Übertragung des von der Erfassungseinrichtung (25) gelieferten Signals als moduliertes Datensignal, aufweist, und mit einer Überwachungszentrale (5), die eine Sende/Empfangseinheit (37) zum Empfang des modulierten Datensignals und eine Steuer- und Auswerteeinrichtung (35) zur Auswertung des übertragenen Datensignals aufweist.

8. Überwachungssystem nach Anspruch 7, **dadurch gekennzeichnet, daß** die Modulationseinrichtung das modulierte Datensignal in das Netz einkoppelt.

## Claims

1. Monitoring unit for mains-operated household appliances for connection to mains current supply leads, with
a measuring device (25), said measuring device (25) being associated with the mains supply leads and measuring parameters which can be measured on the mains supply leads, such as voltage, current, frequency or impedance;
a storage device (23) in which certain operating states of the household appliance (15) are stored with the corresponding parameters; and
an evaluation means (21, 29, 31), said evaluation means (21, 29, 31) reading out the respective operating state from the storage device (23) depending on the measured parameters.

2. Monitoring unit according to claim 1, **characterized in that** the evaluation means (31) comprises a modulation element, said modulation element modulating a data signal corresponding to the operating state and injecting said signal into the mains supply leads (9.1, 9.2) or wirelessly transmitting said signal.

3. Monitoring unit according to claim 1 or 2, **characterized in that** there is provided a switching element (19) associated with the mains supply leads, said switching element (19) being controllable by the evaluation means (31).

4. Monitoring unit according to any one of the preceding claims, **characterized in that** a receiving element (29) is provided, said receiving element (29) receiving data signals which have been transmitted wirelessly or via the mains supply leads (9.1, 9.2) and supplying said signals to the evaluation means (31).

5. Monitoring unit according to any one of the preceding claims, **characterized in that** said monitoring unit is in the form of an adapter plug.

6. Monitoring unit according to any one of the preceding claims, **characterized in that** a learning element (33) is provided, wherein, when in a learning mode, for a selectable operating state said learning element (33) writes the instantaneously measured parameters to the storage device (23).

7. Monitoring system for monitoring mains-operated household appliances, with a monitoring means (3) associated with the domestic appliance (15), said monitoring means (3) comprising a measuring means (25) for measuring parameters which can be measured on mains supply leads; a storage device (23) in which certain operating states of the domestic appliance (15) are stored with the corresponding parameters; an evaluation means (21, 29, 31) which reads out the respective operating state from the storage device (23) depending on the measured parameters; and a modulation means (29) for transmitting the signal from the measuring means (25) in the form of a modulated data signal; and with a central monitoring station (5), said central monitoring station (5) comprising a sending/receiving unit (37) for receiving the modulated data signal and a control and evaluation means (35) for evaluating the transmitted data signal.

8. Monitoring system according to claim 7, **characterized in that** the modulation means injects the modulated data signal into the mains.

## Revendications

1. Module de contrôle pour appareils électroménagers fonctionnant sur secteur destiné à être couplé aux câbles d'alimentation du réseau, comprenant
un dispositif de saisie (25), qui est assigné aux câbles d'alimentation du réseau et qui saisit des paramètres détectables sur les câbles d'alimentation du réseau, par ex. tension, courant, fréquence ou impédance,
un module de mémoire (23), dans lequel sont stockés certains des états de fonctionnement déterminés de l'appareil électroménager (15) avec les paramètres correspondants, et
un dispositif d'analyse (21,29,31), qui extrait à partir du module de mémoire (23) l'état de fonctionnement respectif en fonction des paramètres saisis.

2. Module de contrôle selon la revendication 1, **caractérisé en ce que** le dispositif d'analyse (31) comprend un organe de modulation, qui module un signal de données correspondant à l'état de fonctionnement et qui l'injecte dans les câbles d'alimentation du réseau (9.1, 9.2) ou qui le transmet sans fil.

3. Module de contrôle selon l'une des revendications 1 ou 2, **caractérisé en ce qu'**il est pourvu d'un élément de circuit (19) assigné aux câbles d'alimentation du réseau et pouvant être commandé par le dispositif d'analyse (31).

4. Module de contrôle selon l'une des revendications précédentes, **caractérisé en ce qu'**il est pourvu d'un organe de réception (29), qui reçoit les signaux de données transmis sans fil ou par les câbles d'alimentation du réseau (9.1,9.2) et qui les amène vers le dispositif d'analyse (31).

5. Module de contrôle selon l'une des revendications précédentes, **caractérisé en ce qu'**il est conçu sous forme d'une fiche intermédiaire.

6. Module de contrôle selon l'une des revendications précédentes, **caractérisé en ce qu'**il est pourvu d'un élément d'apprentissage (33) qui, pour un état de fonctionnement pouvant être sélectionné, inscrit dans le module de mémoire (23), dans le cadre d'un mode d'apprentissage, les paramètres saisis à ce moment

7. Système de contrôle destiné à contrôler des appareils électroménagers fonctionnant sur secteur, comportant
un élément de contrôle (3) assigné à l'appareil électroménager (15), qui comprend un dispositif de saisie (25) destiné à saisir des paramètres détectables sur les câbles d'alimentation du réseau, un module de mémoire (23) dans lequel sont stockés des états de fonctionnement déterminés de l'appareil électroménager avec les paramètres correspondants, un dispositif d'analyse (21,29,31) qui extrait à partir du module de mémoire (23) l'état de fonctionnement respectif en fonction des paramètres saisis et un organe de modulation (29) destiné à transmettre le signal délivré par le dispositif de saisie (25) sous forme d'un signal de données modulé, et
une centrale de contrôle (5), qui comprend un organe d'émission/réception (37) destiné à recevoir le signal de données modulé et un organe de commande et d'analyse (35) destiné à analyser le signal de données transmis.

8. Système de contrôle selon la revendication 7, **caractérisé en ce que** l'organe de modulation injecte le signal de données modulé dans le réseau.
